# EUROPEAN PATENT APPLICATION

(11) **EP 0 576 128 A1**
(43) Date of publication of application: **29.12.1993**
(21) Application number: 93303615.4
(22) Date of filing: 04.05.1993
(51) Int. Cl.: C08L 33/02, C08L 33/08, C09J 151/00, C08F 265/06

(54) **Polymer blend containing an acid-rich polymer**

(30) Priority: 23.06.1992 US 903046
(71) Applicant: ROHM AND HAAS COMPANY, Philadelphia Pennsylvania 19105 (US)
(72) Inventor: Chou, Chuen-Shyong, Dresher, Pennsylvania 19025 (US); Kesselmayer, Mark Alan, Lansdale, Pennsylvania 19446 (US); Lavoie, Alvin Charles, Lansdale, Pennsylvania 19446 (US)
(74) Representative: Angell, David Whilton

(57) **Abstract**

Multi-component adhesive compositions and methods for preparing the same are described. These adhesive compositions are useful as pressure-sensitive adhesives, laminating adhesives, textile/non-woven adhesives, construction and ceramic tile adhesives, packaging adhesives and wood glue.

## Description

The present invention relates to a multi-component polymer, in particular multi-component adhesive compositions. This invention further relates to multi-component repulpable adhesive compositions and a process for their preparation.

Products made from the adhesive compositions of this invention are particularly useful as pressure-sensitive, laminating, film and packaging adhesives, but are also useful as textile, non-woven, construction and ceramic tile adhesives, as well as wood glue.

Global concern over the quality of the environment and the need to recycle what was once considered waste is an ever-growing concern. Paper and other cellulose fiber products are recyclable, and measures exists which remove inks and other contaminants in the repulping process. However, there remains a problem with adhesives.

One of the problems with paper and related products is that they contain labels having pressure-sensitive adhesives which have proven difficult to separate from paper fibers under normal pulping conditions. During the pulping process, the adhesive tends to agglomerate or stay intact and remain with the paper fibers. This causes environmental problems when processing streams have to be purged, it results in costly equipment downtime, and adversely affects product quality problems due to the presence of "stickies", i.e., reagglomerated adhesive particles or intact portions of adhesive which contaminate the paper fibers or build-up on process equipment.

Attention in the past has been focused on adhesives for splicing tape used to couple one roll of paper to another during its processing. The art has developed very specific water-dispersable, pressure- sensitive adhesives such as those described in U.S. Patents 3,441,430, 3,865,770, 4,052,368, 4,413,080, and 4,569,960.

U.S. Pat No. 5,102,733 discloses a pressure-sensitive adhesive and a surface-active agent to detackify adhesives during pulping and to prevent agglomeration of the adhesive. U.S. Pat. No. 4,916,171 discloses core-shell polymers having an alkali-insoluble emulsion polymer core and an alkali-soluble emulsion polymer shell which are useful in coating, inks and as a hydraulic cement modifier. U.S. Pat. No.3,441,430 discloses a water-soluble adhesive tape for use in splicing rolls of paper. U.S. Pat. No. 3,865,770 discloses a normally tacky and pressure-sensitive water-dispersible adhesive. These polymers are alleged to have improved tack and heat stability. U.S. Pat. Nos. 4,413,080 and 4,569,960 disclose a normally tacky and pressure-sensitive, water-dispersible adhesive. This is a water-dispersible, pressure-sensitive adhesive for splicing tape useful for carbonless paper without deactivating its color generating system. U.S. Pat. No.4,413,082 discloses a water-soluble, pressure- sensitive self-adhesive composition. U.S. Pat. No. 4.668.730 discloses a latex adhesive composition useful as a pressure-sensitive adhesive or laminating adhesive. The adhesive is reported to be a surfactant-free adhesive prepared using a two-step process of solution polymerization. U.S. Pat. No.4,721,748 discloses a process for preparing adhesives that are alleged to have superior rheological properties, good adhesive film clarity and no ink bleeding.

The problem with such repulpable pressure-sensitive adhesives used in the splicing tapes, which are the subject matter of such patents, is that extreme precautions have to be followed in storage and handling of the splicing tapes. The adhesives, for instance, have to be maintained at the controlled constant relative humidity. While such adhesives have found some acceptance under controlled environments of the paper manufacturing industry as splicing tape, they are not totally acceptable for use as general purpose adhesives, such as labels, tapes and decals.

What is required, therefore, is a repulpable adhesive which is capable of use in the current repulping processes that does not present a problem for recycled streams nor adversely affect the quality of the products produced from these recycled fibers.

The present invention seeks to overcome the problems associated with the prior art.

It is therefore an object of the present invention to provide a repulpable adhesive composition that, when employed in the repulping process, is free of stickies. Another object of the present invention is to provide a repulpable adhesive composition that remains dispersed in the recycle-stream during the repulping process. Still another object of the present invention is to provide a repulpable adhesive composition that is removable from recycle streams employing current technology and equipment. Still a further object of the present invention is to provide a repulpable adhesive composition that remains dispersed in the recycle-streams without causing process problems due to the presence of stickies. A further object of the present invention is to provide a repulpable adhesive composition that is removable from substrates such as glass and plastics. A final object of the present invention is to provide a repulpable adhesive composition that can be present in the final paper product without adversely affecting product quality.

According to a first aspect of the present invention there is provided a composition comprising an acid-rich polymeric component and a non acid-rich polymeric component wherein the non acid-rich polymeric component is formed from a mixture of free radical polymerizable monomers, and wherein the acid-rich polymeric component is formed from a mixture of free radical polymerizable monomers having a higher level of copolymerized acid than the non acid-rich polymeric component, preferably wherein the composition is a repulpable adhesive composition and the composition is in the form of an aqueous emulsion.

According to a second aspect of the present invention there is provided a method for producing a multi-component repulpable adhesive composition comprising forming an acid-rich polymeric component and a non acid-rich polymeric component, each component being prepared by an aqueous emulsion polymerization process wherein the non acid-rich polymeric component is formed from a mixture of free radical polymerizable monomers, and wherein the acid-rich polymeric component is formed from a mixture of free radical polymerizable monomers having a higher level of copolymerized acid than the non acid-rich polymeric component, and wherein the acid-rich polymeric component is polymerized in the presence of the non acid-rich polymeric component and in the presence of initiator.

According to a third aspect of the present invention there is provided a method for producing a multi-component repulpable adhesive composition comprising forming an acid-rich polymeric component and a non acid-rich polymeric component, each component being prepared by an aqueous emulsion polymerization process wherein the non acid-rich polymeric component is formed from a mixture of free radical polymerizable monomers, and wherein the acid-rich polymeric component is formed from a mixture of free radical polymerizable monomers having a higher level of copolymerized acid and wherein the non acid-rich polymeric component is polymerized in the presence of the acid-rich polymeric component and in the presence of initiator.

According to a fourth aspect of the present invention there is provided a method for producing a multi-component repulpable adhesive composition containing an acid-rich component and a non acid-rich component comprising separately forming both the acid-rich polymeric component and the non acid-rich polymeric component by an aqueous free radical emulsion polymerization process wherein the non acid-rich polymeric component is formed from a mixture of free radical polymerizable monomers, and wherein the acid-rich polymeric component comprises a polymer containing a higher level of copolymerizable than in the non acid-rich polymeric component and blending the components.

Preferably, the acid-rich polymeric component comprises a mixture of monomers having from about 40 to about 95 percent of an alkylacrylate or methacrylate and from about 5 to about 60 percent of polymerized acid and the non acid-rich polymeric component comprises a mixture of monomers having from about 90 to about 100 percent of an alkylacrylate or methacrylate and from about 0 (zero) to about 10 percent of polymerized acid based on the weight of the individual components.

Preferably, the acid rich polymeric component and the non acid-rich polymeric component is selected from the group consisting of methylacrylate, ethylacrylate, butylacrylate, 2-ethylhexylacrylate, decylacrylate, methylmethacrylate, ethylmethacrylate, butylmethylmethacrylate, dibutyl maleate, monobutyl maleate, acrylic acid, methacrylic acid, itaconic acid, maleic acid, fumaric acid, phosphoethyl methacrylate, sulfoethylmethacrylate, vinyl sulfonic acid, styrene sulfonic acid, styrene, substituted styrene, acrylonitrile, vinyl acetate, isobutyl methacrylate, butadiene, isoprene, isobutylene, ethylene, esters of versatic acid.

Preferably, the weight ratio of the non acid-rich polymeric component polymer to the acid-rich polymeric component polymer can range from about 5:95 to about 95:5, preferably, from about 15:85 to about 90:10, and more preferably, from about 25:75 to about 85:15, and most preferably from about 40:60 to about 80:20.

Preferably, the acid-rich polymeric component comprises from about 90 to about 75 percent butyl acrylate and from about 10 to about 25 percent methacrylic acid and wherein the non acid-rich polymeric component comprises from about 90 to about 100 percent butyl acrylate and from about 10 to about 0 (zero) percent methacrylic acid, preferably from about 5 to about 0 (zero) percent methacrylic acid.

Preferably, the composition is used as a repulpable pressure-sensitive adhesive, a laminating adhesive, a non-woven/textile adhesive, a removable adhesive or a permanent adhesive.

The present invention therefore provides a multi-component, repulpable adhesive compositions having an acid-rich polymeric component and a non acid-rich polymeric component which can be prepared by a two-stage, sequential aqueous emulsion polymerization process wherein the non acid-rich polymeric component comprises a mixture of free radical polymerizable monomers, and wherein the acid-rich polymeric component comprises a mixture of free radical polymerizable monomers having a higher level of copolymerized carboxylic acid than the non acid-rich polymeric component and wherein the acid-rich polymeric component is polymerized in the presence of the non acid-rich polymeric component and in the presence of initiator.

Products made from the repulpable adhesive composition of this invention are particularly useful as a pressure-sensitive, laminating, film and packaging adhesives, but are also useful as textile, non-woven, construction and ceramic tile adhesives, as well as wood glues.

According to the present invention, there is therefore provided a multi-component adhesive composition having an acid-rich polymeric component and a non acid-rich polymeric component which can be prepared by a two-stage, sequential aqueous emulsion polymerization process wherein the non acid-rich polymeric component comprises a mixture of free radical polymerizable monomers, and wherein the acid-rich polymeric component comprises a mixture of free radical polymerizable monomers having a higher level of copolymerized carboxylic acid than the non acid-rich polymeric component and wherein the acid-rich polymeric component is polymerized in the presence of the non acid-rich polymeric component and in the presence of initiator.

Despite the large number of adhesives, there remains a need for an adhesive composition that is redispersible in recycle streams so as to not adversely affect the repulping or paper making equipment, nor contaminate the recycle water system, nor the quality of the final product. These requirements must be obtained without adversely impacting on the physical properties of the adhesive such as peel, shear and tack. None of the available water-soluble or water-dispersible adhesives have resolved these problems. Stickies, i.e., reagglomerated adhesive particles that stay intact with paper fibers or build-up on process equipment, remains a continuing concern. What has been found is an adhesive that is redispersible; that is capable of being removed employing technology and equipment in current use; that is capable of remaining in the recycle stream and the final product without adversely affecting product quality; and that is capable of being removed with relative ease from substrates such as glass and plastic.

The water-dispersible adhesive composition of the present invention in its preferred embodiment is composed of an acid-rich polymeric component which is formed from a mixture of monomers having from about 40 to about 95 percent of an alkylacrylate or methacrylate and mixtures thereof and from about 5 to about 60 percent of polymerizable acid and a non acid-rich polymeric component which is formed from a mixture of monomers having from about 90 to about 100 percent of an alkylacrylate or methacrylate and mixtures thereof and from about 0 (zero) to about 10 percent of polymerized acid based on the weight of the individual components. The repulpable adhesive composition of the present invention maintains its dispersion when used under general repulping conditions. This allows broad use of the adhesive compositions of this invention, both in older processes as well as in present paper making and finishing processes. The adhesive composition of the present invention will not precipitate out of solution in the form of stickies and are repulpable over a broad pH range. When the repulpable adhesive composition of the present invention is used as a pressure-sensitive adhesive, the pulping process has a pH from about 5 to about 12, preferably from about 9 to about 11.

Two significant disadvantages of redispersed adhesive compositions in the paper industry is the tendency of the redispersed adhesive to build up in the recycle water stream to the point of causing system failures; or the redispersed adhesive can reagglomerate to generate stickies which will adversely affect the quality of the final product. The present invention has resolved both of these inherent problems of the prior art. Adhesive compositions made according to the present invention provide redispersed adhesive particle size distributions which can be removed by physical separation, such as washing, flotation and cleaning, and more specifically, during the de-inking process using current equipment and technology, or can remain in the recycle steam and the final product without deteriorating product quality. The particle size of the repulpable adhesive composition of this invention is from about 2 microns to about 200 microns, preferably from about 5 to about 50 microns.

The multi-component adhesive described herein is also suitable for use in label/tapes on plastic and glass substrates. When using the adhesive composition of this invention, the label/tape can be easily detached from the plastic or glass substrate under recycling conditions, with the adhesive either being carried with the label/tape or the adhesive being redispersed in the aqueous medium as described above in the paper repulping system. Therefore, plastics, glass, and fibers can be easily recycled without the interference of stickies.

The multi-component adhesive described herein is also suitable for use in nonwoven/textile binding adhesives. The non-woven/ textile fabric can be disintegrated utilizing techniques similar to those outlined above. The non-woven fibers can then be reclaimed without the interference of stickies.

Suitable monomers for the preparation of the acid-rich and non acid-rich polymeric components of the present invention include methylacrylate, ethylacrylate, butylacrylate, 2-ethylhexylacrylate, decylacrylate, methylmethacrylate, ethylmethacrylate, butylmethylmethacrylate, dibutyl maleate, monobutyl maleate, acrylic acid, methacrylic acid, itaconic acid, maleic acid, fumaric acid, phosphoethyl methacrylate, sulfoethylmethacrylate, vinyl sulfonic acid, styrene sulfonic acid, styrene, substituted styrene, acrylonitrile, vinyl acetate, isobutyl methacrylate, butadiene, isoprene, isobutylene, ethylene, esters of versatic acid, other C₁ - C₁₂ alkylacrylates, methacrylates, maleates, fumarates, and itaconates and the like.

It is believed that when the repulpable adhesive composition of the present invention is used in making a pressure-sensitive adhesive, the molecular weight distribution may be critical to obtain the desired balance of adhesive and repulp properties. If the molecular weight is too high, the resulting adhesive will have low tack and peel. If the molecular weight is too low, the resulting adhesive will have very low shear strength. Generally, the molecular weight of the non acid-rich polymeric component is higher than that of the acid-rich polymeric component polymer. The molecular weight of the acid rich and non acid-rich polymeric components is typically from about 5,000 to about 10,000,000 as determined by gel permeation chromatography.

When a repulpable pressure-sensitive adhesive composition is produced using the composition of this invention, the weight ratio of the non acid-rich polymeric component polymer to the acid-rich polymeric component polymer can range from about 5:95 to about 95:5. Preferably, the weight ratio of the non acid-rich polymeric component polymer to the acid-rich polymeric component polymer is from about 15:85 to about 90:10, more preferably, from about 25:75 to about 85:15, and most preferably about 40:60 to about 80:20.

The Tg (glass transition temperature) of the adhesive composition of this invention depends on the end use in which it is being employed. When the adhesive composition of the present invention is used as a pressure-sensitive adhesive, the overall Tg of the polymer is preferably about 10 degrees centigrade or more below the use temperature. When the adhesive composition of the present invention is used as a laminating, film, packaging, non-woven or textile adhesive, the Tg depends upon the use and the application of the specific end product. For example, when the adhesive is used as a textile binder for making non-woven fiberfill for use as thermal insulation or upholstery, one desires a low Tg non-woven adhesive at least 10 degrees above room temperature. Conversely, when the adhesive is used to bind non-woven fibers for use in roofing shingles, one desires a high Tg non-woven adhesive at least 20 degrees above room temperature.

The Tg of a polymer is a measure of the hardness and melt flow of the polymer. The higher the Tg, the less the melt flow and the harder the coating. Tg is described in *Principles of Polymer Chemistry* (1953), Cornell University Press. The Tg can be actually measured or it can be calculated as described by Fox in *Bull. Amer. Physics Soc*., 1, 3, page 123 (1956). Tg, as used herein, refers to actually measured values. For measurement of the Tg of a polymer, differential scanning calorimetry (DSC) can be used (a rate of heating of 10°C per minute, with Tg taken at the first inflection point).

In an alternate embodiment of the present invention, the order in which the acid-rich and non acid-rich polymeric components are polymerized can be reversed to produce the adhesive composition of this invention. In still another embodiment of the present invention, the acid-rich and non acid-rich polymeric components are prepared separately and then the individual lattices are blended in order to produce the repulpable adhesive composition of this invention.

The acid-rich and non acid-rich polymeric components of the present invention can be prepared by free radical based, solution, suspension, bulk or emulsion polymerization or some combination of the above processes.

In order to optimize the properties of the repulpable pressure-sensitive composition of the present invention, an element of the process involves the use of an initiator. Preferably, the initiator is persulfate based, the initiator is used in a range from about 0.1 to about 5 percent, most preferably from about 0.15 to about 2 percent by weight of total polymer. By varying the concentration and weight of the initiator, the physical properties such as peel, shear and tack of the repulpable adhesive composition is modified. Initiators suitable for use in the current invention may be selected from the group consisting of persulfates, such as ammonium persulfate, sodium persulfate or potassium persulfate, and the like; organic peroxides such as lauroyl peroxide, benzoyl peroxide, t-butylperoxy-2-ethylhexanoate, t-butylperoxy acetate, dicumyl peroxide, and the like; azo initiators such as azo-bis-isobutyronitrile, 4,4'-azobis(4-cyanopentanoic acid), 2,2'-azobis(2-amidinopropane) dihydrochloride and the like; and redox initiated systems based on a metal catalyst such as iron sulfate, copper sulfate, vanadium sulfate, or other appropriate metal salt, combined with an oxidizing and reducing agent such as a persulfate salt, hydrogen peroxide, t-butyl peroxide, cumene hydroperoxide or other suitable material as the oxidizing agent coupled with a reducing agent such as sodium bisulfite, sodium formaldehydesulfoxylate, a reducing sugar such as ascorbic acid, a mercaptan such as hydroxyethylmercaptan, methylmercaptopropionate, n-dodecylmercaptan, or the like.

The present invention shall now be described only by way of example.

In the following Examples, reference shall be made to the following test procedures.

### Pressure Sensitive Adhesive Testing

The pH of each emulsion was adjusted to 7.0 by the addition of suitable bases and then coated on the conventional release liner and dried at 82°C (180°F) for 15 min. The thickness of the adhesive dried films was about 0.002 cm (0.8 mil) measured by a Ames Micrometer. The coated sheets were then laminated/covered with a paper label face stock. The laminates were cut into 2.54 cm (1-inch) wide strips and conditioned for at least 24 hours at 25°C and 50% relative humidity prior to testing.

The emulsion was also coated on a treated biaxially oriented polypropylene film (OPP) and a treated poly(ethylene tetraphthalate) film (Mylar) and dried at 82°C (180°F) for 6 minutes, respectively. The coated sheets were covered with a untreated OPP. The thickness of the dried adhesive films were 0.00254 cm (1.0 mil). The laminates were cut into 2.54 cm (1-inch) wide strips and conditioned for at least 24 hours at 25°C and 50% relative humidity prior to testing.

Peel strengths were determined based on the Pressure-Sensitive Tape Council Method No. 1 using a 20 min. dwell time and untreated polyethylene film (PE) or stainless steel panel (SS) as the test substrate. Shear resistances were measured based on the Pressure-Sensitive Tape Council Method No. 7 using 2.54 x 2.54 cm (1 x 1 inch) overlap areas for paper and 2.54 x 1.27 cm (1 X 0.5 inch) for OPP and Mylar, and using 1000 gram weights. Tack was measured using the Tag and Label Manufacturer's Institute Loop Tack Tester.

### Repulpability

Three strips of 2.54 x 20.32 cm (1 x 8 inch) paper label were laminated onto an 20.32 x 20.32 cm (8 x 8 inch) of photocopy paper. The overall adhesive content was about 4-5% on total sample weight. The evaluation of repulpability was based on the PTS-Method PR:252/90 with minor modification of the test conditions. The pulping was carried out under either neutral water or alkaline conditions. However, most of the experiments were conducted at pH 10.5-11 unless other conditions were specified. The temperature was controlled to be 40-70°C. The particle size distribution of the disintegrated adhesive is examined under a microscope using the resulting handsheet. Excellent = the average adhesive particle size in the handsheet is less than 50 micron. Good = the average particle size in the handsheet is between 50 to 100 micron. Fair = the average adhesive particle size in the handsheet is between 100 to 200 micron. Poor = the average adhesive particle size in the handsheet is between 200 micron and 1000 micron. Fail = the average adhesive particle size is greater than 1000 micron or the film is hardly disintegrated.

### Removability of Labels or Tape from Glass and Plastic

Water removability was measured by applying paper label, film label or tape (5.08 x 2.54 cm (2 inch x 1 inch)) to either a glass bottle or a plastic bottle and then agitating the sample gently under water at pH = 8.0 - 9.0 and 50 - 60°C. The label or the tape should easily detach from the substrate, with the adhesive being carried on the label or tape and being non-tacky, or the adhesive being redispersed in the aqueous medium.

### Example 1

An emulsion polymer of composition 98 BA/2 MAA (BA = butyl acrylate; MAA = methacrylic acid) wt. percent was prepared by adding 300 grams of water to a kettle and heating to 90°C under a blanket of nitrogen. To the heated kettle 1.0 grams of ammonium persulfate dissolved in 20 grams of water was added along with 17.8 grams of 45% solids, 100 nm particle size, BA/MMA/MAA (MMA = methylmethacrylate) latex polymer. This addition was followed by a rinse of 20 grams of water. The reaction was allowed to equilibrate to 85°C. A monomer emulsion was prepared containing 300 grams of water, 26 grams of a 23% solution of sodium dodecyl benzene sulfonate, 980 grams of butyl acrylate, and 20 grams of methacrylic acid. This monomer emulsion was gradually fed into the above-heated kettle over a period of 190 minutes. Over the same period of time, a solution of 11 grams of ammonium persulfate dissolved in 194.8 grams of water was gradually added to the kettle. When the feeds were complete, the lines were rinsed with 20 grams of water. When the feeds were complete, the reaction was held at 85°C for 30 minutes then cooled to 60°C and treated with a mixture of 0.03 grams of Versene and 20 grams of a 0.1% ferrous sulfate heptahydrate solution followed by 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 20 minutes and again treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature.

### Example 2

An emulsion polymer of composition 85 BA/15 MAA was prepared by adding 300 grams of water to a kettle and heating to 90°C under a blanket of nitrogen. To the heated kettle 1.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 85°C. A monomer emulsion was prepared containing 300 grams of water, 26 grams of a 23% solution of sodium dodecyl benzene sulfonate, 850 grams of butyl acrylate, and 150 grams of methacrylic acid. This monomer emulsion was gradually fed into the above heated kettle over a period of 190 minutes. Over the same period of time, a solution of 11 grams of ammonium persulfate dissolved in 194.8 grams of water was gradually added to the kettle. When the feeds were complete, the lines were rinsed with 20 grams of water. When the feeds were complete, the reaction was held at 85°C for 30 minutes then cooled to 60°C and treated with 0.03 grams of Versene and 20 grams of a 0.1% ferrous sulfate heptahydrate solution followed by 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 20 minutes and again treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature.

### Example 3

An emulsion polymer of composition 50 (98 BA/2 MAA)//50 (85 BA/15 MAA) was prepared by adding 280 grams of water to a kettle and heating to 89°C under a blanket of nitrogen. To the heated kettle 1.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 85°C. A monomer emulsion (1) was prepared containing 120 grams of water, 8.7 grams of a 23% solution of sodium dodecyl benzene sulfonate, 490 grams of butyl acrylate, and 10 grams of methacrylic acid. This monomer emulsion was gradually fed into the above heated kettle at a rate of 3.3 grams per minute for 20 minutes then at 8.0 grams per minute for 70 minutes. The reaction was held at 85°C for 30 minutes. A second monomer emulsion (2) was prepared containing 120 grams of water, 6.7 grams of Alipal EP-120, 425 grams of butyl acrylate, and 75 grams of methacrylic acid. This monomer emulsion was fed to the kettle at a rate of 6.6 grams per minute over a period of 95 minutes. A solution of 11 grams of ammonium persulfate dissolved in 194.8 grams of water was gradually added to the kettle concurrently with the additions of both monomer emulsion (1) and (2). When the feeds were complete, the lines were rinsed with 10 grams of water, and the reaction was held at 85°C for 30 minutes then cooled to 65°C and treated with 0.03 grams of Versene and 20 grams of a 0.1% ferrous sulfate heptahydrate solution followed by 0.33 grams of 70% tert-butyl hydroperoxide dissolved in 6.7 grams of water and 0.2 grams of sodium formaldehyde sulfoxylate dissolved in 6.7 grams of water. The reaction mixture was allowed to stir for 30 minutes and again treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 25 minutes and then treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for an additional 20 minutes and then treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature. The reaction was then treated with ammonium hydroxide to adjust the pH to 7.0.

### Example 4

An emulsion polymer of composition 85 (98 BA/2 MAA)//15 (85 BA/15 MAA) was prepared by adding 280 grams of water to a kettle and heating to 89°C under a blanket of nitrogen. To the heated kettle 1.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 85°C. A monomer emulsion (1) was prepared containing 120 grams of water, 8.7 grams of a 23% solution of sodium dodecyl benzene sulfonate, 833 grams of butyl acrylate, and 17 grams of methacrylic acid. This monomer emulsion was gradually fed into the above heated kettle at a rate of 3.2 grams per minute for 20 minutes then at 6.3 grams per minute for 145 minutes. The reaction was held at 85°C for 30 minutes. A second monomer emulsion (2) was prepared containing 120 grams of water, 6.7 grams of Alipal EP-120, 127.5 grams of butyl acrylate, and 22.5 grams of methacrylic acid. This monomer emulsion was fed to the kettle at a rate of 11 grams per minute over a period of 25 minutes. A solution of 11 grams of ammonium persulfate dissolved in 194.8 grams of water was gradually added to the kettle concurrently with the additions of both monomer emulsion (1) and (2). When the feeds were complete, the lines were rinsed with 10 grams of water, and the reaction was held at 85°C for 30 minutes then cooled to 65°C and treated with 20 grams of a 0.1% ferrous sulfate heptahydrate solution followed by 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 30 minutes and again treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 25 minutes and then treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for an additional 20 minutes and then treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature. The reaction was then treated with ammonium hydroxide to adjust the pH to 7.0.

### Example 5

An emulsion polymer of composition 75 (98 BA/2 MAA)//25 (85 BA/15 MAA) was prepared by adding 280 grams of water to a kettle and heating to 89°C under a blanket of nitrogen. To the heated kettle 1.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 85°C. A monomer emulsion (1) was prepared containing 120 grams of water, 8.7 grams of a 23% solution of sodium dodecyl benzene sulfonate, 735 grams of butyl acrylate, and 15 grams of methacrylic acid. This monomer emulsion was gradually fed into the above heated kettle at a rate of 3.25 grams per minute for 20 minutes then at 6.5 grams per minute for 125 minutes. The reaction was held at 85°C for 30 minutes. A second monomer emulsion (2) was prepared containing 120 grams of water, 6.7 grams of Alipal EP-120, 212.5 grams of butyl acrylate, and 37.5 grams of methacrylic acid. This monomer emulsion was fed to the kettle at a rate of 7.5 grams per minute over a period of 25 minutes. A solution of 11 grams of ammonium persulfate dissolved in 194.8 grams of water was gradually added to the kettle concurrently with the additions of both monomer emulsion (1) and (2). When the feeds were complete, the lines were rinsed with 10 grams of water, and the reaction was held at 85°C for 30 minutes then cooled to 65°C and treated with 20 grams of a 0.1% ferrous sulfate heptahydrate solution followed by 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 30 minutes and again treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 25 minutes and then treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for an additional 20 minutes and then treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature. The reaction was then treated with ammonium hydroxide to adjust the pH to 7.0.

### Example 6

An emulsion polymer of composition 25 (98 BA/2 MAA)//75 (85 BA/15 MAA) was prepared by adding 280 grams of water to a kettle and heating to 89°C under a blanket of nitrogen. To the heated kettle 1.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 85°C. A monomer emulsion (1) was prepared containing 120 grams of water, 8.7 grams of a 23% solution of sodium dodecyl benzene sulfonate, 245 grams of butyl acrylate, and 15 grams of methacrylic acid. This monomer emulsion was gradually fed into the above heated kettle at a rate of 3.0 grams per minute for 20 minutes then at 6.5 grams per minute for 50 minutes. The reaction was held at 85°C for 30 minutes. A second monomer emulsion (2) was prepared containing 120 grams of water, 6.7 grams of Alipal EP-120, 637.5 grams of butyl acrylate, and 112.5 grams of methacrylic acid. This monomer emulsion was fed to the kettle at a rate of 8.0 grams per minute over a period of 110 minutes. A solution of 11 grams of ammonium persulfate dissolved in 194.8 grams of water was gradually added to the kettle concurrently with the additions of both monomer emulsion (1) and (2). When the feeds were complete, the lines were rinsed with 10 grams of water, and the reaction was held at 85°C for 30 minutes then cooled to 65°C and treated with 20 grams of a 0.1% ferrous sulfate heptahydrate solution followed by 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 30 minutes and again treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 25 minutes and then treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for an additional 20 minutes and then treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature. The reaction was then treated with ammonium hydroxide to adjust the pH to 7.0.

### Example 7

An emulsion polymer of composition 50 (98 BA/2 MAA)//50 (90 BA/10 MAA) was prepared by adding 800 grams of water to a kettle and heating to 94°C under a blanket of nitrogen. To the heated kettle 2.0 grams of ammonium persulfate dissolved in 40 grams of water was added along with 35.6 grams of 45% solids, 100 nm particle size, BA/MMA/MAA latex polymer. This addition was followed by a rinse of 40 grams of water. The reaction was allowed to equilibrate to 90°C. A monomer emulsion (1) was prepared containing 300 grams of water, 3.36 grams of Alipal CO-436, 980 grams of butyl acrylate, and 20 grams of methacrylic acid. This monomer emulsion was gradually fed into the above heated kettle at a rate of 3.9 grams per minute for 20 minutes then at 17.5 grams per minute for 70 minutes. The reaction was held at 90°C for 30 minutes. A second monomer emulsion (2) was prepared containing 300 grams of water, 1.68 grams of Alipal CO-436, 900 grams of butyl acrylate, and 100 grams of methacrylic acid. This monomer emulsion was fed to the kettle at a rate of 14.5 grams per minute over a period of 90 minutes, followed by a rinse of 40 grams of water. A solution of 22 grams of ammonium persulfate dissolved in 189.6 grams of water was gradually added to the kettle concurrently with the additions of both monomer emulsion (1) and (2). When the feeds were complete, the reaction was held at 90°C for 30 minutes then cooled to 65°C and treated with 10 grams of a 0.1% ferrous sulfate heptahydrate solution followed by 0.66 grams of 70% tert-butyl hydroperoxide dissolved in 13.4 grams of water and 0.4 grams of sodium formaldehyde sulfoxylate dissolved in 13.4 grams of water. The reaction mixture was allowed to stir for 15 minutes and again treated with 0.66 grams of 70% tert-butyl hydroperoxide dissolved in 13.4 grams of water and 0.4 grams of sodium formaldehydesulfoxylate dissolved in 13.4 grams of water. The reaction mixture was allowed to stir for 15 minutes and then treated with 0.66 grams of 70% tert-butyl hydroperoxide dissolved in 13.4 grams of water and 0.4 grams of sodium formaldehydesulfoxylate dissolved in 13.4 grams of water. The reaction mixture was allowed to stir for an additional 15 minutes and then treated with 0.66 grams of 70% tert-butyl hydroperoxide dissolved in 13.4 grams of water and 0.4 grams of sodium formaldehydesulfoxylate dissolved in 13.4 grams of water. The latex was then cooled to room temperature. The reaction was then treated with ammonium hydroxide to adjust the pH to 4.5.

### Example 8

An emulsion polymer of composition 25 (98 BA/2 MAA)//75 (90 BA/10 MAA) was prepared by adding 400 grams of water to a kettle and heating to 94°C under a blanket of nitrogen. To the heated kettle 1.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 90°C. A monomer emulsion (1) was prepared containing 75 grams of water, 0.84 grams of Alipal CO-436, 245 grams of butyl acrylate, and 5 grams of methacrylic acid. This monomer emulsion was gradually fed into the above heated kettle at a rate of 3.9 grams per minute for 20 minutes then at 9.9 grams per minute for 25 minutes. The reaction was held at 90°C for 30 minutes. A second monomer emulsion (2) was prepared containing 225 grams of water, 1.26 grams of Alipal CO-436, 675 grams of butyl acrylate, and 75 grams of methacrylic acid. This monomer emulsion was fed to the kettle at a rate of 7.2 grams per minute over a period of 135 minutes, followed by a rinse of 20 grams of water. A solution of 11 grams of ammonium persulfate dissolved in 94.8 grams of water was gradually added to the kettle concurrently with the additions of both monomer emulsion (1) and (2). When the feeds were complete, the reaction was held at 90°C for 30 minutes then cooled to 65°C and treated with 10 grams of a 0.1% ferrous sulfate heptahydrate solution followed by 0.33 grams of 70% tert-butyl hydroperoxide dissolved in 6.7 grams of water and 0.2 grams of sodium formaldehyde sulfoxylate dissolved in 6.7 grams of water. The reaction mixture was allowed to stir for 15 minutes and again treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 15 minutes and then treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for an additional 15 minutes and then treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature. The reaction was then treated with ammonium hydroxide to adjust the pH to 4.5.

### Example 9

An emulsion polymer of composition 75 (98 BA/2 MAA)//25 (90 BA/10 MAA) was prepared by adding 300 grams of water to a kettle and heating to 88°C under a blanket of nitrogen. To the heated kettle 1.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 85°C. A monomer emulsion (1) was prepared containing 225 grams of water, 8.7 grams of a 23% solution of sodium dodecyl benzene sulfonate, 735 grams of butyl acrylate, and 15 grams of methacrylic acid. This monomer emulsion was gradually fed into the above heated kettle at a rate of 3.25 grams per minute for 20 minutes then at 7.1 grams per minute for 130 minutes. The reaction was held at 85°C for 30 minutes. A second monomer emulsion (2) was prepared containing 75 grams of water, 6.7 grams of Alipal EP-120, 225 grams of butyl acrylate, and 25 grams of methacrylic acid. This monomer emulsion was fed to the kettle at a rate of 7.4 grams per minute over a period of 45 minutes. A solution of 11 grams of ammonium persulfate dissolved in 194.8 grams of water was gradually added to the kettle concurrently with the additions of both monomer emulsion (1) and (2). When the feeds were complete, the lines were rinsed with 10 grams of water, and the reaction was held at 85°C for 30 minutes then cooled to 65°C and treated with 10 grams of a 0.1% ferrous sulfate heptahydrate solution followed by 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 30 minutes and again treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 25 minutes and then treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for an additional 20 minutes and then treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature.

### Example 10

An emulsion polymer of composition 50 (90 BA/10 MAA)//50 (98 BA/2 MAA) was prepared by adding 400 grams of water to a kettle and heating to 94°C under a blanket of nitrogen. To the heated kettle 1.0 grams of ammonium persulfate dissolved in 10 grams of water was added along with 6.55 grams of 47% solids, 150 nm particle size, BA/MMA/MAA latex polymer. This addition was followed by a rinse of 10 grams of water. The reaction was allowed to equilibrate to 90°C. A monomer emulsion (1) was prepared containing 150 grams of water, 0.84 grams of Alipal CO-436, 450 grams of butyl acrylate, and 50 grams of methacrylic acid. This monomer emulsion was gradually fed into the above heated kettle at a rate of 3.9 grams per minute for 20 minutes then at 7.8 grams per minute until the monomer emulsion (1) had been completely added to the kettle. The reaction was held at 90°C for 30 minutes. A second monomer emulsion (2) was prepared containing 150 grams of water, 0.84 grams of Alipal CO-436, 500 grams of butyl acrylate. This monomer emulsion was fed to the kettle at a rate of 7.9 grams per minute. A solution of 11 grams of ammonium persulfate dissolved in 44.5 grams of water was gradually added to the kettle concurrently with the additions of both monomer emulsion (1) and (2). When the feeds were complete, the reaction was held at 90°C for 30 minutes then cooled to 65°C and treated with 10 grams of a 0.1% ferrous sulfate heptahydrate solution followed by 0.5 grams of 70% tert-butyl hydroperoxide dissolved in 5 grams of water and 0.3 grams of sodium formaldehydesulfoxylate dissolved in 5 grams of water. The reaction mixture was allowed to stir for 15 minutes and again treated with 0.5 grams of 70% tert-butyl hydroperoxide dissolved in 5 grams of water and 0.3 grams of sodium formaldehydesulfoxylate dissolved in 5 grams of water. The latex was then cooled to room temperature. The reaction was then treated with ammonium hydroxide to adjust the pH to 4.2.

### Example 11

An emulsion polymer of composition 50 (85 BA/15 MAA)//50 (98 BA/2 MAA) was prepared by adding 300 grams of water to a kettle and heating to 89°C under a blanket of nitrogen. To the heated kettle 11.0 grams of ammonium persulfate dissolved in 20 grams of water was added along with 17.8 grams of 45% solids, 100 nm particle size, BA/MMA/MAA latex polymer. This addition was followed by a rinse of 20 grams of water. The reaction was allowed to equilibrate to 85°C. A monomer emulsion (1) was prepared containing 150 grams of water, 13.4 grams of Alipal EP-120, 425 grams of butyl acrylate, and 75 grams of methacrylic acid. This monomer emulsion was gradually fed into the above heated kettle at a rate of 6.3 grams per minute for 105 minutes. The reaction was held at 85°C for 30 minutes. A second monomer emulsion (2) was prepared containing 150 grams of water, 8.7 grams of a 23% solution of sodium dodecyl benzene sulfonate, 490 grams of butyl acrylate, and 10 grams of methacrylic acid. This monomer emulsion was fed to the kettle at a rate of 7.3 grams per minute over a period of 90 minutes. A solution of 1.0 grams of ammonium persulfate dissolved in 194.8 grams of water was gradually added to the kettle concurrently with the additions of both monomer emulsion (1) and (2). When the feeds were complete the reaction was held at 85°C for 30 minutes then cooled to 65°C and treated with 0.03 grams of Versene and 20 grams of a 0.1% ferrous sulfate heptahydrate solution followed by 0.33 grams of 70% tert-butyl hydroperoxide dissolved in 6.7 grams of water and 0.2 grams of sodium formaldehyde sulfoxylate dissolved in 6.7 grams of water. The reaction mixture was allowed to stir for 20 minutes and again treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for 20 minutes and then treated with 0.33 grams of 70% tert-butyl hydroperoxide dissolved in 6.7 grams of water and 0.2 grams of sodium formaldehydesulfoxylate dissolved in 6.7 grams of water. The reaction mixture was allowed to stir for an additional 20 minutes and then treated with 0.33 grams of 70% tert-butyl hydroperoxide dissolved in 6.7 grams of water and 0.2 grams of sodium formaldehydesulfoxylate dissolved in 6.7 grams of water. The latex was then cooled to room temperature. The reaction was then treated with ammonium hydroxide to adjust the pH to 4.2.

### EXAMPLE 12

Example 1 and 2 were adjusted to pH 7 using ammonium hydroxide solution and then were coated on a silicon solventless release liner and dried at 82 °C (180°F) for 15 minutes respectively. The thickness of the dried adhesive films were about 0.002 cm (0.8 mil). The coated paper was then covered with a 27 kg (60 lb.) litho paper. The adhesive properties and the repulpability were evaluated in accordance with the procedures described in the previous section. The results are presented in Table I.

**Table I**

| Example | Peel Strength, (oz/in) g/cm | Loop Tack, (oz) g | Shear Resistance (hr) | Repulpability |
|---|---|---|---|---|
| 1 | 122 (11) | 652 (23) | 0.6 | Fail |
| 2 | 22 (2) | 283 (10) | >25 | Excellent |

### EXAMPLE 13

The procedures of Example 12 were repeated except that different levels of dispersed rosin acid tackifier were added to Example 2. The results are presented in Table II.

**Table II**

| % Tackifier | Peel Strength, (oz/in) g/cm | Loop Tack, (oz) g | Shear Resistance (hr) | Repulpability |
|---|---|---|---|---|
| 0 | 22 (2) | 283 (10) | 25 | Excellent |
| 30 | 88 (8) | 510 (18) | 10 | Excellent |
| 40 | 132 (12) | 567 (20) | 9 | Good |
| 50 | 165 (15) | 567 (20) | 3 | Fair |

### EXAMPLE 14

The procedures of Example 12 were repeated except that Example 1 and 2 were blended at different ratio. The results are presented in Table III.

**Table III**

| Example 1/2 ratio | Peel Strength, (oz/in) g/cm | Loop Tack, (oz) g | Shear Resistance (hr) | Repulpability |
|---|---|---|---|---|
| 85/15 | 231 (21) | 1389 (49) | 0.5 | Poor |
| 75/25 | 209 (19) | 1361 (48) | 0.9 | Fair |
| 50/50 | 187 (17) | 1106 (39) | 0.3 | Good |
| 25/75 | 66 (6) | 227 (8) | 0.1 | Excellent |

### EXAMPLE 15

The procedures of Example 12 were repeated. The results are presented in Table IV.

**Table IV**

| Example | Peel Strength, (oz/in) g/cm | Loop Tack, (oz) g | Shear Resistance (hr) | Repulpability |
|---|---|---|---|---|
| 4 | 451 (41) | 1730 (61) | 0.5 | Fair |
| 5 | 506 (46) | 1673 (59) | 2.5 | Good |
| 6 | 385 (35) | 709 (25) | 18.0 | Excellent |
| 7 | 396 (36) | 1332 (47) | 1.0 | Excellent |
| 8 | 176 (16) | 1191 (42) | 1.7 | Fair |
| 3 | 462 (42) | 1276 (45) | 4.0 | Excellent |
| 10 | 319 (29) | 907 (32) | 0.6 | Good |

### EXAMPLE 16

The procedures of Example 15 were repeated except that different levels of dispersed rosin tackifier were added to Example 3. The results are presented in Table V.

**Table V**

| % Tackifier | Peel Strength, (oz/in) g/cm | Loop Tack, (oz) g | Shear Resistance (hr) | Repulpability |
|---|---|---|---|---|
| 10 | 495 (45) | 1361 (48) | 3.5 | Excellent |
| 20 | 550 (50) | 1588 (56) | 2.5 | Excellent |
| 30 | 583 (53) | 1644 (58) | 2.0 | Excellent |

### EXAMPLE 17

Example 3 and 5 were adjusted to pH 8.5-9.5 with the addition of sodium hydroxide solution. To Example 3, 30% of tackifier and 5% of glycerol were added. To Example 5, 20% of tackifier and 5% of glycerol were added. The procedures of Example 15 were then repeated except the repulping processes were carried out under different pH conditions. The results are presented in Table VI.

**Table VI**

| | Example 3 | Example 5 |
|---|---|---|
| Peel Strength (oz/in) | 385 (35) | 341 (31) |
| Loop Tack (oz) | 850 (30) | 907 (32) |
| Shear Strength (hr) | 1.0 | 2.4 |
| Repulpability pH=7 | Fair | Fair |
| pH=8.5 | Good | Good |
| pH=10 | Excellent | Excellent |

### EXAMPLE 18

Example 3, 5, 7, 8, and 9 were adjusted to a pH of 7.0 by the addition of base. The emulsions were then coated on a treated biaxially oriented polypropylene film (OPP) and dried at 82°C (180°F) for 6 min. The coated sheets were covered with a untreated OPP. The thickness of the dried adhesive films were 0.00254 cm (1.0 mil). The laminates were cut into 2.54 cm (1-inch) wide strips and conditioned for at least 24 hours at 25°C and 50% relative humidity prior to testing. The results are presented in Table VII.

**Table VII**

| Example | Peel Strength, (oz/in) g/cm | Loop Tack, (oz) g | Shear Resistance (hr) |
|---|---|---|---|
| 3 | 198 (18) | 680 (24) | 8.7 |
| 5 | 209 (19) | 1842 (65) | 1.0 |
| 7 | 198 (18) | 1162 (41) | 1.0 |
| 8 | 209 (19) | 652 (23) | 6.0 |
| 9 | 297 (27) | 1304 (46) | 1.2 |

### EXAMPLE 19

Example 3 was adjusted to pH 8.5-9.0 with the addition of sodium hydroxide solution, and the polymer solids were then diluted to 8% with the addition of water. The polyester web used in the testing was Dacron ^{tm} 381-W, 1.5 denier, 1.5 staple length carded to a web weight of 28 g (1 oz.)/sy. The web was saturated with the above emulsion on a Birch Brothers Padder at 25 psi and a speed of 27 ft/min. Drying and curing were carried out at 150°C for 4 min. in a Mathis oven.

All tensile measurements were done with 2.54 cm (one inch) wide and 10.16 (4 inch) long strips in cross-machine direction in a Thwing-Albert Intellect 500 tensile tester. Samples were immersed in 99% isopropanol for 30 min. before the testing of isopropanol wet tensile strength. The softness and stiffness of the fabrics were evaluated by a Handle-O-Meter and a Cantilever Bending respectively. The results are shown in Table VIII.

**Table VIII**

| Dry Tensile (g/in) g/cm | Isopropanol Tensile (g/in) g/cm | Handle-O-Meter | Stiffness |
|---|---|---|---|
| 214 (537) | 98.8 (247) | 76.6 | 62 |

A 2.54 x 7.62 cm (1 x 3 inch) fabric was immersed in neutral pH water for 3 min. The fabric was observed to disintegrate with gentle agitation.

### EXAMPLE 20

Example 3 and 5 were diluted to 40% solids with the addition of water. The adhesives were then coated on poly(ethylene tetraphthalate) film (PET), metallized biaxially oriented polypropylene (Met. OPP) and biaxial oriented polypropylene, and dried at 82°C (180°F) for 2 min. The add-on was about 1-2 lb/ream respectively. The films were then covered with polyethylene (PE) by calender nipping at 82°C/413685Nm⁻² (180°F/60 psi). The bond strength was measured by T-Peel with 2.54 x 15.24 cm (1 x 6 inch) strips after 1/2 hour and 24 hour dwell times in a Instron at a strain rate of 30.48 cm (12 in.)/min. The results are presented in Table IX.

**Table IX**

| Tensile Strength g/cm (g/inch) | | | |
|---|---|---|---|
| Film Types | Dwell Time (hr) | Example 3 | Example 5 |
| PET/PE | 1/2 | 38 (95) | 72 (181) |
| | 24 | 72 (181) | 112 (280) |
| Met. OPP/PE | 1/2 | 41 (104) | 49 (122) |
| | 24 | 53 (132) | 65 (163) |
| OPP/PE | 1/2 | 50 (125) | 40 (100) |
| | 24 | 65 (163) | 58 (145) |

### EXAMPLE 21

The procedures of Example 12 and 18 were repeated to prepare paper label and film label using Example 3 and Example 3 with 20% of dispersed rosin tackifier, respectively. Water removability was determined by applying the label (2 inch X 1 inch) to a glass bottle or a plastic bottle and then agitating the sample gently under water at pH = 8.0 - 9.0 and 50 - 60°C. The label should easily detach from the substrate with the adhesive film being carried on the label and being non-tacky or dispersed in the aqueous medium. The results are presented in Table X.

**Table X**

| | Example 3 | | Example 3 + 20% Tackifier | |
|---|---|---|---|---|
| Substrate | Paper | Film | Paper | Film |
| Plastics | yes | yes | yes | yes |
| Glass | yes | yes | yes | yes |

The following trade marks have been used in the specification: Alipal, Dacron and Versene.

## Claims

1. A composition comprising an acid-rich polymeric component and a non acid-rich polymeric component wherein the non acid-rich polymeric component is formed from a mixture of free radical polymerizable monomers, and wherein the acid-rich polymeric component is formed from a mixture of free radical polymerizable monomers having a higher level of copolymerized acid than the non acid-rich polymeric component, preferably wherein the composition is a repulpable adhesive composition and the composition is in the form of an aqueous emulsion.

2. The composition of Claim 1 wherein the acid-rich polymeric component comprises a mixture of monomers having from about 40 to about 95 percent of an alkylacrylate or methacrylate and from about 5 to about 60 percent of polymerized acid and the non acid-rich polymeric component comprises a mixture of monomers having from about 90 to about 100 percent of an alkylacrylate or methacrylate and from about 0 (zero) to about 10 percent of polymerized acid based on the weight of the individual components.

3. The composition of Claim 1 or Claim 2 wherein the acid rich polymeric component and the non acid-rich polymeric component is selected from the group consisting of methylacrylate, ethylacrylate, butylacrylate, 2-ethylhexylacrylate, decylacrylate, methylmethacrylate, ethylmethacrylate, butylmethylmethacrylate, dibutyl maleate, monobutyl maleate, acrylic acid, methacrylic acid, itaconic acid, maleic acid, fumaric acid, phosphoethyl methacrylate, sulfoethylmethacrylate, vinyl sulfonic acid, styrene sulfonic acid, styrene, substituted styrene, acrylonitrile, vinyl acetate, isobutyl methacrylate, butadiene, isoprene, isobutylene, ethylene, esters of versatic acid.

4. The composition of any one of the preceding Claims wherein the weight ratio of the non acid-rich polymeric component polymer to the acid-rich polymeric component polymer can range from about 5:95 to about 95:5, preferably, from about 15:85 to about 90:10, and more preferably, from about 25:75 to about 85:15, and most preferably from about 40:60 to about 80:20.

5. The composition of Claim 4 wherein the acid-rich polymeric component comprises from about 90 to about 75 percent butyl acrylate and from about 10 to about 25 percent methacrylic acid and wherein the non acid-rich polymeric component comprises from about 90 to about 100 percent butyl acrylate and from about 10 to about 0 (zero) percent methacrylic acid, preferably from about 5 to about 0 (zero) percent methacrylic acid.

6. A method for producing a multi-component repulpable adhesive composition comprising forming an acid-rich polymeric component and a non acid-rich polymeric component, each component being prepared by an aqueous emulsion polymerization process wherein the non acid-rich polymeric component is formed from a mixture of free radical polymerizable monomers, and wherein the acid-rich polymeric component is formed from a mixture of free radical polymerizable monomers having a higher level of copolymerized acid than the non acid-rich polymeric component, and wherein the acid-rich polymeric component is polymerized in the presence of the non acid-rich polymeric component and in the presence of initiator.

7. A method for producing a multi-component repulpable adhesive composition comprising forming an acid-rich polymeric component and a non acid-rich polymeric component, each component being prepared by an aqueous emulsion polymerization process wherein the non acid-rich polymeric component is formed from a mixture of free radical polymerizable monomers, and wherein the acid-rich polymeric component is formed from a mixture of free radical polymerizable monomers having a higher level of copolymerized acid and wherein the non acid-rich polymeric component is polymerized in the presence of the acid-rich polymeric component and in the presence of initiator.

8. A method for producing a multi-component repulpable adhesive composition containing an acid-rich component and a non acid-rich component comprising separately forming both the acid-rich polymeric component and the non acid-rich polymeric component by an aqueous free radical emulsion polymerization process wherein the non acid-rich polymeric component is formed from a mixture of free radical polymerizable monomers, and wherein the acid-rich polymeric component comprises a polymer containing a higher level of copolymerizable than in the non acid-rich polymeric component and blending the components.
